# EUROPÄISCHE PATENTSCHRIFT

(11) **EP 0 658 499 B1**
(45) Veröffentlichungstag und Bekanntmachung des Hinweises auf die Patenterteilung: **12.11.1997**
(21) Anmeldenummer: 94119471.4
(22) Anmeldetag: 09.12.1994
(51) Int. Cl.: B65G 21/00, B65G 15/26, B07C 5/02

(54) **Teleskopförderbahn zum Fördern und Vermessen von Stückgut**
Telescopic conveyor path for conveying and measuring items
Chemin de convoyage télescopique pour transporter et mesurer des objets

(30) Priorität: 14.12.1993 DE 4342534
(43) Veröffentlichungstag der Anmeldung: 21.06.1995
(73) Patentinhaber: CALJAN A/S, 8361 Hasselager (DK)
(72) Erfinder: Christmann, Jürgen, D-65795 Hattersheim 2 (DE)
(74) Vertreter: Rüger, Rudolf, Dr.-Ing.

(56) Entgegenhaltungen:
- DE-A- 3 319 220
- FR-A- 2 649 815
- GB-A- 1 146 895
- US-A- 3 127 978
- US-A- 3 485 339
- US-A- 4 643 299

## Beschreibung

Die Erfindung betrifft eine Vorrichtung nach dem Oberbegriff des Patentanspruches 1 sowie ein Verfahren zum Fördern und Vermessen von Stückgut.

Aus der Praxis sind Förderbahnen für Stückgut bekannt, die einen Teleskopförderer, einen Vereinzelungsförderer, eine Wägeeinrichtung mit Volumenmeßrahmen sowie eine Weiche umfassen, die auch als Routertisch bezeichnet wird. Der Teleskopförderer weist einen in einer entsprechenden Halteeinrichtung höhenverstellbar gelagerten Grundkörper auf, in dem zwei ausfahrbare Teleskopsegmente verschiebbar gelagert sind. Der Grundkörper und die Teleskopsegmente sind mit Umlenkrollen versehen, um die ein Transportband herumgeführt ist. Außerdem ist das Transportband um eine in dem Grundkörper angeordnete und von einem Elektromotor angetriebene Antriebsrolle geführt. Das Transportband ist dabei derart angetrieben, daß das Obertrum desselben von dem äußeren Ende eines Teleskopsegments zu dem Grundkörper läuft. Das ausgezogene Teleskopsegment bildet somit eine Aufgabestelle für Stückgut.

Zur Vereinzelung des auf dem Transportband laufenden Stückgutes und zur Fortsetzung des Transportweges ist an der den Teleskopsegmenten gegenüberliegenden Seite des Grundkörpers ein Vereinzelungsförderer aufgestellt. Dieser weist einen Grundrahmen auf, in dem mehrere achsparallel angeordnete Rollen drehbar gelagert sind, von denen wenigstens eine über einen Elektromotor angetrieben ist. Um die Rollen ist ein Transportband gespannt, dessen Obertrum im wesentlichen ohne größeren Absatz an das ablaufende Ende des Teleskopförderers anschließt. Das Transportband des Vereinzelungsförderers läuft mit deutlich höherer Geschwindigkeit als das Transportband des Teleskopförderers, so daß das Stückgut einzeln übernommen wird. Im Anschluß an den Vereinzelungsförderer ist eine Wägeeinrichtung aufgestellt, die ebenfalls ein über Rollen geführtes, angetriebenes Transportband aufweist. Die das Transportband führenden Rollen mit der zugehörigen Antriebseinrichtung sind dabei an einem Hilfsrahmen gelagert, der über eine Wägezelle auf einem Stützrahmen aufsitzt.Bei der Wägeeinrichtung sind weitere Meßeinrichtungen, wie der bereits genannte Volumenmeßrahmen, angeordnet. Dieser Rahmen, den das Stückgut passieren muß, weist eine Vielzahl von Lichtschranken sowohl für die vertikale als auch die horizontale Richtung auf. Diese bilden einen elektronischen Vorhang zur Bestimmung des Volumens des durch den Volumenmeßrahmen geführten Stückgutes. Zusätzlich ist ein Scanner vorhanden, der an dem Stückgut angebrachte Barcodes abliest und einer Steuereinrichtung zuführt.

Im unmittelbaren Anschluß an die Wägeeinrichtung ist die Stückgutweiche aufgestellt. Diese weist einen auf einem entsprechenden Rahmen aufgebauten, etwa trapezförmigen Rollentisch auf, dessen von den Rollen definierte Transportebene in gleicher Höhe wie das Obertrum der Wägeeinrichtung liegt. Ausgangsseitig ist die Stückgutweiche mit mehreren weiteren Förderern verbunden, die das Stückgut von der Weiche übernehmen. Zum Umschalten des Transportweges von der Wägeeinrichtung auf eine der von der Stückgutweiche abgehenden Fördereinrichtungen weist die Stückgutweiche zwei Leitfahnen auf, die um im Abstand parallel zueinander angeordnete Vertikalachsen schwenkbar sind, Zum Verschwenken derselben ist eine Antriebseinrichtung vorgesehen, die von der genannten Verarbeitungseinheit gesteuert ist.

Die insoweit beschriebene Förderbahn erfordert eine beträchtliche Stellfläche zu ihrer Aufstellung. Allein schon der Grundkörper des Teleskopförderers weist eine Länge von ungefähr fünf Metern auf. Hinzu kommen die Längsausdehnungen des Vereinzelungsförderers und der Wägeeinrichtung, die zusammen mehr als drei Meter ausmachen sowie der für die Stückgutweiche erforderliche Platz. In der Regel ist insbesondere in Warenaufgabebereichen, in denen die beschriebene Anlage zur Anwendung kommt, der somit erforderliche Platz von über acht Metern Länge nicht vorhanden.

Davon ausgehend ist es eine Aufgabe der Erfindung, eine Förderbahn für Stückgut zu schaffen, die deutlich weniger Platz beansprucht und bei der das geförderte Stückgut automatisch gewogen sowie bedarfsweise anderweitig vermessen wird. Außerdem ist es eine Aufgabe der Erfindung, ein Verfahren zum Fördern und Vermessen von Stückgut zu schaffen, das den Platzbedarf einer das Verfahren ausführenden Anlage gering hält.

Die vorstehend genannte Aufgabe wird durch eine Förderbahn für Stückgut mit den Merkmalen des kennzeichnenden Teiles des Patentanspruches 1 gelöst. Bei der erfindungsgemäßen Förderbahn ist der Vereinzelungsförderer über dem Teleskopförderer angeordnet. Ein Obertrumabschnitt des zu dem Teleskopförderer gehörigen Transportbandes geht dabei unter dem Vereinzelungsförderers durch. Um einen Übergang des Stückgutes von dem zu dem Teleskopförderer gehörigen Transportband auf das zu dem Vereinzelungsförderer gehörige Transportband zu ermöglichen, ist ein Abschnitt des Transportbandes gegenüber dem unter dem Vereinzelungsförderer weg verlaufenden Transportband in der Höhe angehoben. Das von dem Transportband des Teleskopförderers herangeführte Stückgut läuft somit glatt auf das schneller laufende Vereinzelungsband auf. Weil jedoch der Vereinzelungsförderer über dem Grundgerüst des Teleskopförderers sitzt, ist in der Transportrichtung der Förderbahn keinerlei zusätzlicher Platz für den Vereinzelungsförderer erforderlich. Das gleiche gilt für die Wägeeinrichtung. Auch diese ist über dem Grundgerüst des Teleskopförderers angeordnet, so daß für diese keinerlei zusätzlicher Platz in der Längserstreckung der Förderbahn erforderlich ist. Die Wägeeinrichtung schließt dabei mit ihrem Transportband unmittelbar an das Transportband des Vereinzelungsförderers an, so daß beide Transportbänder mit ihren Obertrumen im wesentlichen in einer gemeinsamen Ebene liegen. Das ankommende Stückgut wird an dem teleskopseitigen Ende des Grundkörpers bereits in diese Ebene überführt und läuft in dieser über den Vereinzelungsförderer und die Wägeeinrichtung oberhalb des Teleskopförderers. Der von dem Teleskopförderer beanspruchte Platz wird somit doppelt genutzt. Zum einen nämlich durch das Grundgerüst des Teleskopförderers, das zur Aufnahme der Teleskopsegmente eine gewisse Mindestlänge aufweisen muß. Zum anderen sind auf demselben Längenabschnitt der Vereinzelungsförderer und die Wägeeinrichtung angeordnet, so daß die gesamte Baulänge der Förderbahn erheblich verkürzt ist. Der vormals für den Vereinzelungsförderer und die Wägeeinrichtung erforderliche Platz in der Länge der Förderbahn ist gänzlich eingespart. Dies ermöglicht eine weitaus größere Freizügigkeit bei der Planung und Aufstellung der Förderbahn.

Das Gerüst des Vereinzelungsförderers kann dabei fest mit dem Grundgerüst des Teleskopförderers verbunden werden. Dies kann dadurch erreicht werden, daß das Gerüst des Vereinzelungsförderers auf das Grundgestell des Teleskopförderers aufgesetzt und mit diesem verschraubt wird. Darüber hinaus ist es möglich, die Gestelle miteinander zu verschweißen oder zu einer baulichen Einheit zu integrieren. Jedoch kann es im Einzelfalle auch angebracht sein, den Vereinzelungsförderer mit eigenen, an dem Grundgerüst des Teleskopförderers vorbeigeführten Beinen auf dem Boden aufzuständern.

Die Höhendifferenz zwischen dem teleskopseitigen Ende des Teleskopförderers bis auf die Höhe des Obertrums des Vereinzelungsförderers kann auf einfache Weise mit einer auch als Bandhöcker bezeichneten Rampe überwunden werden, über die das Transportband geführt ist. Auf dieser Rampe wird das Stückgut von dem Transportband auf die Höhe des Vereinzelungsförderers gehoben.

Um eine gute Wägegenauigkeit sicherzustellen, kann es vorteilhaft sein, den Teleskopförderer und das Vereinzelungsband schwingungsmäßig von der Wägeeinrichtung zu entkoppeln. Die Entkopplung bewirkt, daß Schläge und Stöße, die durch das Aufwerfen von Stückgut auf den Teleskopförderer entstanden sein können, nicht auf die Wägeeinrichtung durchgreifen. Somit wird eine gute Genauigkeit bei der Messung der über die Wägeeinrichtung laufenden Massen sichergestellt.

Die schwingungsmäßige Entkopplung der Wägeeinrichtung von der übrigen Anlage kann auf einfache Weise erreicht werden, indem das Grundgestell der Wägeeinrichtung separat auf dem Boden aufgestellt wird. Das Grundgestell der Wägeeinrichtung überbrückt somit das Grundgerüst des Teleskopförderers. Der Teleskopförderer und die Wägeeinrichtung berühren sich dabei nicht.

Die Wägeeinrichtung kann seitlich zu beiden Seiten des Transportbandes mit Verkleidungen versehen werden. Um zu vermeiden, daß durch auf den Verkleidungen abgelegte Gegenstände das Meßergebnis des durchlaufenden Stückgutes verfälscht wird oder daß das Meßergebnis verfälscht wird, wenn sich im Bereiche der Fördereinrichtung tätiges Personal auf den Verkleidungen abstützt, ist es vorteilhaft, wenn die Verkleidungen an dem Grundgestell aufgehängt bzw. abgestützt sind.

Das zu dem Teleskopförderer gehörige Transportband kann an der Rampe über Umlenkrollen von der Höhe des Obertrums des Vereinzelungsförderers unter das Gerüst desselben geführt sein. Von dort erstreckt sich das Transportband noch bis zu dem den Teleskopsegmenten gegenüberliegenden Ende des Grundgerüstes. Somit können die Teleskopsegmente bei Bedarf in das Grundgerüst des Teleskopförderers eingeschoben werden, ohne daß das Obertrum des Transportbandes im Wege wäre. Dies ist insbesondere dann gegeben, wenn der unter dem Vereinzelungsförderer und der Wägeeinrichtung entlangführende Abschnitt des Transportbandes im wesentlichen parallel zu den Obertrumen des Vereinzelungsförderers und der Wägeeinrichtung angeordnet ist.

Beider Wägeeinrichtung kann ein Volumenmeßrahmen zur Bestimmung des Rauminhaltes der den durch den Volumenmeßrahmen geförderten Stückgüter vorgesehen sein. Der Volumenmeßrahmen ist dabei ein rechteckiger Rahmen, dessen lichte Weite und Höhe auch den größten zu befördernden Stückgütern Durchgang gewähren. An dem Rahmen ist eine Vielzahl von Lichtschranken vorgesehen, die einen elektronischen Vorhang aufspannen. Die Lichtschranken erfassen dabei sowohl die Breite als auch die Höhe des durch den Rahmen laufenden Stückgutes. Zur Bestimmung der Längsausdehnung des zu vermessenden Stückgutes dient ein Geschwindigkeitssignal, das von einer Geschwindigkeitsmeßeinrichtung abgeleitet werden kann. Anhand der Dauer des Durchganges eines Stückgutes durch den Volumenmeßrahmen und der Transportgeschwindigkeit wird auf die Längsausdehnung des Stückgutes geschlossen.

Zur Erkennung von an dem Stückgut angebrachten Codemarken, wie beispielsweise Strichcodeetiketten oder ähnlichem, kann an der Förderbahn ein Scanner vorgesehen sein. Dieser kann sowohl an den Vereinzelungsförderer als auch an der Wägeeinrichtung vorgesehen werden. Es ist aber auch möglich, diesen Scanner in den Volumenmeßrahmen zu integrieren.

Zur weiteren Beförderung des vereinzelten und gewogenen Stückgutes kann sich an die Wägeeinrichtung eine weitere Fördereinrichtung anschließen. Wenn bereits an dieser Stelle anhand der von dem Scanner oder der Wägeeinrichtung oder anderweitig gewonnener Daten eine Sortierung des geförderten Stückgutes vorgenommen werden soll, kann die weitere Fördereinrichtung eine auch als Routertisch bezeichnete Stückgutweiche sein, die einen Eingang und wenigstens zwei Ausgänge aufweist. Die Stückgutweiche kann auf einfache Weise ein etwa trapezförmiger Rollentisch sein, dessen Schmalseite der Wägeeinrichtung zugewandt ist. An die breitere Seite schließen sich dann weitere Fördereinrichtungen an. Zur Auswahl eines Transportweges von der Schmalseite des trapezförmigen Rollentischs auf eine der angeschlossenen weiteren Transporteinrichtungen können an dem Rollentisch zwei Leitfahnen vorgesehen sein, die um zwei im Abstand parallel zueinander verlaufende Vertikalachsen schwenkbar sind. Die Steuerung dieser Leitfahnen kann manuell oder von dem Scanner gesteuert erfolgen.

Wenn der Teleskopförderer in der Höhe verstellbar ist, kann die Förderbahn für Stückgut auf verschiedene Gegebenheiten angepaßt werden. Die Höhenverstellbarkeit kann auf einfache Weise erreicht werden, indem das Grundgerüst des Teleskopförderers, beispielsweise an seinem den Teleskopsegmenten gegenüberliegenden Ende in einem Ständer um eine Querachse schwenkbar gelagert und an der bei den Teleskopsegmenten liegenden Seite über längenverstellbare Mittel in dem Ständer gelagert ist. Die längenverstellbaren Mittel können Schraubspindeln, Hydraulikzylinder od.dgl. sein.

Der auf das Verfahren zum Fördern und Vermessen von Stückgut gerichtete Teil der Aufgabe wird durch ein Verfahren mit den Merkmalen des Patentanspruches 23 gelöst.

Weil bei diesem Verfahren das Stückgut bereits in einem Bereich vereinzelt, d.h. in eine Reihe von sich mit Abstand in einer Reihe bewegendem Stückgut gebracht und dieses gewogen wird, ist der bislang für das Aufstellen eines Vereinzelungsförderers und einer Wägeeinrichtung erforderliche Platz nunmehr nicht weiter notwendig.

Das Verfahren gestattet also eine besonders gedrängte Bauweise der Förderbahn. Es ergibt sich eine doppelte Raumausnutzung. Der von dem Grundgerüst des Teleskopförderers eingenommene Platz kann für sich kaum weiter reduziert werden, weil die Größe des Grundgerüstes durch seine Funktion, nämlich die Teleskopsegmente aufnehmen zu müssen, vorgegeben ist. Auch die Größe des Vereinzelungsförderers und der Wägeeinrichtung ist jeweils für sich kaum reduzierbar. Durch das Übereinanderstapeln der genannten Komponenten unter Beibehaltung eines gestreckten Transportweges wird jedoch erheblich Platz gespart.

Darüber hinaus ist es vorteilhaft, wenn das Stückgut nach seinem Volumen vermessen wird und wenn möglicherweise vorhandene Codes abgetastet werden. Nach den so gewonnenen Informationen kann das Stückgut sortiert werden, beispielsweise indem eine sich an die Förderbahn anschließende Weiche entsprechend gestellt wird.

In der Zeichnung ist ein Ausführungsbeispiel der Erfindung dargestellt. Es zeigen:
- Fig. 1: eine erfindungsgemäße Förderbahn in perspektivischer Darstellung,
- Fig. 2: die Förderbahn nach Fig. 1 mit ausgezogenen Teleskopsegmenten in Seitenansicht und
- Fig. 3: den Teleskopförderer nach Fig. 1 und 2 in einer ausschnittsweisen Schnittdarstellung.

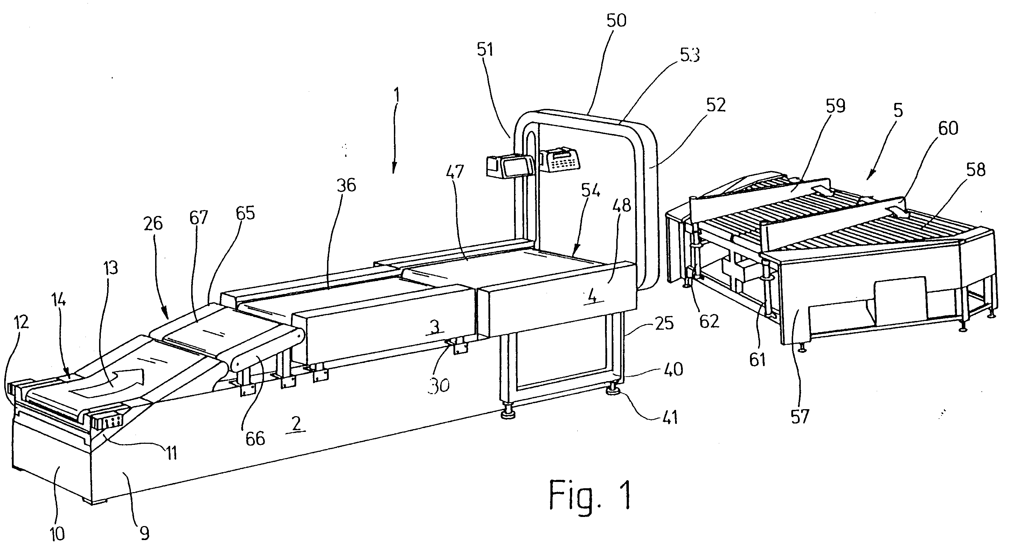

In Fig. 1 ist eine Förderbahn 1 dargestellt, die einen Teleskopförderer 2, einen Vereinzelungsförderer 3 sowie eine Wäge- und Meßeinrichtung 4 umfaßt. An die Förderbahn 1 schließt sich unmittelbar eine Stückgutweiche 5 an, die im Betrieb ohne nennenswerten Zwischenraum Anschluß an die Wäge- und Meßeinrichtung 4 aufgestellt ist.

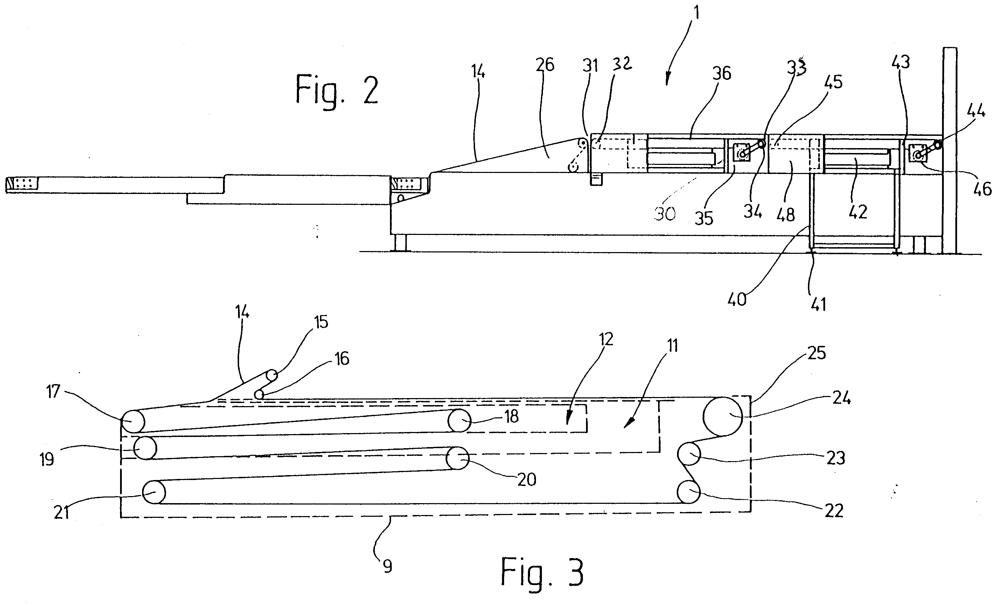

Der Teleskopförderer 2 weist ein längliches, etwa kastenförmiges Grundgerüst 9 auf, das mit entsprechenden Füßen auf den am Aufstellort vorhandenen Boden aufgestellt ist. Das im wesentlichen kastenförmige Grundgerüst 9 weist an einer Stirnseite 10 zwei ausfahrbare Teleskopsegmente 11, 12 auf. Die Teleskopsegmente 11, 12 sind dabei in der Transportrichtung verstellbar, die durch einen mit 13 bezeichneten Pfeil angedeutet ist. Während die Teleskopsegmente 11, 12 bei der in der Fig. 1 dargestellten Förderbahn 1 in ihrer eingefahrenen Stellung dargestellt sind, sind sie bei der in Fig. 2 dargestellten Förderbahn 1 ausgefahren. Der Teleskopförderer 2 weist zum Transport von Stückgut ein Transportband 14 auf, das um sowohl an dem Grundgerüst 9 als auch an den Teleskopsegmenten 11, 12 vorgesehenen Umlenkrollen 15 bis 23 sowie eine Antriebsrolle 24 geschlungen ist. Die Umlenkrollen 15 bis 23 sowie die Antriebsrolle 24 sind in dem Grundgerüst 19 bzw. in den Teleskopsegmenten 11, 12 mit zueinander parallelen Drehachsen drehbar gelagert, wobei auf die Anordnung und Funktion der Umlenkrollen 18 bis 21, die die freie Ausfahrbarkeit der Teleskopsegmente 11, 12 ermöglichen, an späterer Stelle im Zusammenhang mit Fig. 3 Bezug genommen ist. Die an einer den Teleskopsegmenten 11, 12 abgewandten Seite 25 des Grundgerüstes 9 liegende Antriebsrolle 24 ist oberhalb der Umlenkrollen 22, 23 angeordnet, die dem Aufbau und der Einstellung einer gewünschten Transportbandspannung dienen. Die Antriebsrolle 24 ist über geeignete, nicht weiter dargestellte Getriebemittel mit einem Elektromotor verbunden und treibt das Transportband 14 an.

Im Anschluß an die Teleskopsegmente 11, 12 ist auf dem Grundgerüst 9 eine Rampe 26 vorgesehen, die das Transportband 14 anhebt. Das Transportband 14 läuft dabei, wie insbesondere aus Fig. 2 ersichtlich ist, von der an dem äußersten Ende des Teleskopsegmentes 12 liegenden Umlenkrolle 17 an der Oberseite beider Teleskopsegmente 11, 12 entlang in einer Ebene. An der Rampe 26 wird das Transportband 14 nach oben geführt, bis es die Höhe des Vereinzelungsförderers 3 erreicht hat. Von hier aus wird es durch die Umlenkrollen 15, 16 wieder in die Ebene, in der es bereits bei den Teleskopsegmenten 11, 12 gelaufen ist, zurückgeführt, in der es sich unter dem Vereinzelungsförderer 3 und der Wäge- und Meßeinrichtung 4 weg bis zu der Antriebsrolle 24 erstreckt.

Der Vereinzelungsförderer 3 weist ein auf dem Grundgerüst 9 aufgeschraubtes, im wesentliches kastenförmiges Gerüst 30 auf, dessen Breite mit der Breite des Grundgerüstes 9 übereinstimmt. In dem Gerüst 30 ist an einer der Rampe 26 benachbarten Seite 31 eine drehbar gelagerte Umlenkrolle 32 mit einer zu den übrigen Umlenkrollen 15 bis 23 im wesentlichen parallelen Drehachse angeordnet. An einer der Seite 31 gegenüberliegenden Seite 33 des Gerüstes 30 ist parallel zu der Umlenkrolle 32 eine Antriebsrolle 34 drehbar gelagert angeordnet, die über ein Getriebemittel, wie beispielsweise einen Zahnriemen, mit einem Elektromotor 35 angetrieben ist. Um die Umlenkrolle 32 und die Antriebsrolle 34 ist ein endloses Transportband 36 geführt, dessen Obertrum im wesentlichen horizontal verläuft und frei zutage liegt. Das Obertrum des Transportbandes 36 schließt dabei im wesentlichen glatt, d.h. ohne größeren Absatz an das von der Rampe 26 und der Umlenkrolle 15 angehobenen Transportband 14 an.

Aufgrund einer entsprechenden Bemessung der die Antriebsrollen 24 und 34 antreibenden Elektromotoren und Getriebemittel läuft das Transportband 36 in der durch den Pfeil 13 angegebenen Transportrichtung deutlich schneller als das Transportband 14.

Im Anschluß an die Seite 33 des Vereinzelungsförderers 3 ist die Meß- und Wägeeinrichtung 4 auf einem separaten Grundgestell 40 aufgestellt. Das Grundgestell 40 steht mit dem Grundgerüst 9 nicht in Berührung, so daß eine direkte Schwingungsübertragung von dem Grundgerüst 9 auf das Grundgestell 40 unterbunden ist. Das Grundgestell 40 ist über justierbare Schraubfüße 41 direkt auf dem Boden des jeweiligen Aufstellortes aufgestellt. Auf dem das Grundgerüst 9 überbrückenden Grundgestell 40 ist eine Wägezelle 42 angeordnet, die an ihrer Oberseite einen Hilfsrahmen 43 trägt. In dem Hilfsrahmen 43 sind eine Antriebsrolle 44 und eine Umlenkrolle 45 mit zueinander parallelen Achsen drehbar gelagert. Die Antriebsrolle 44 ist dabei an dem dem Vereinzelungsförderer 3 abgewandten Ende des Hilfsrahmens 43 vorgesehen. An der gegenüberliegenden Seite des Hilfsrahmens 43 ist die Antriebsrolle 44 angeordnet, die über einen Zahnriemen von einem Getriebemotor 46 angetrieben ist. Um die Umlenkrolle 45 und die Antriebsrolle 44 läuft ein endloses Transportband 47 mit im wesentlichen der gleichen Geschwindigkeit wie das Transportband 36 bei dem Vereinzelungsförderer 3. Das Transportband 47 liegt mit seinem Obertrum dabei auf derselben Höhe wie das Obertrum des Transportbandes 36, so daß das auf der Förderbahn 1 laufende Stückgut von dem Vereinzelungsförderer 3 im wesentlichen glatt auf das Transportband 47 der Meß- und Wägeeinrichtung 4 übernommen wird.

Bei der Meß- und Wägeeinrichtung 4 lastet der gesamte Hilfsrahmen 43 mit allen an diesem vorgesehenen Teilen, nämlich der Antriebsrolle 44, der Umlenkrolle 45, dem Getriebemotor 46 und dem Transportband 47 als Vorlast auf der Wägezelle 42. Um zu vermeiden, daß diese Vorlast beispielsweise durch Gegenstände, die auf seitlich angeordneten Verkleidungsteilen 48 abgelegt werden könnten, verändert wird, sind diese Verkleidungsteile 48 mit entsprechenden Halterungen an dem Grundgestell 40 befestigt.

Die Meß- und Wägeeinrichtung 4 schließt im wesentlichen glatt mit der Seite 25 des Grundgerüstes 9 ab.

Zur weiteren Vermessung und Erfassung von den zu transportierenden Stückgütern ist im Anschluß an die Meß- und Wägeeinrichtung 4 ein Volumenmeßrahmen 50 vorgesehen. Der Volumenmeßrahmen 50 ist ein im wesentlichen rechteckiger Rahmen, dessen im Abstand parallel zueinander verlaufende Schenkel 51, 52 vertikal und zu beiden Seiten des Transportweges angeordnet und dessen horizontal, im Abstand zueinander liegende Schenkel 53, 54 ober- bzw. unterhalb des Transportweges angeordnet sind. Der Volumenmeßrahmen 50 ist, wie in Fig. 2 dargestellt, im Anschluß an das Grundgerüst 9 separat auf dem Boden aufgeständert. Er kann jedoch auch mit einer entsprechenden Halterung mit dem Grundgestell 40 der Meß- und Wägeeinrichtung 4 verbunden werden, so daß diese mit dem Volumenmeßrahmen 50 eine bauliche Einheit bildet.

In den Schenkeln 51 bis 54 sind Lichtquellen und Fotosensoren vorgesehen, von denen einige horizontal und andere vertikal wirkende Lichtschranken bilden. Diese Lichtschranken stellen einen in dem Volumenmeßrahmen 50 aufgespannten elektronischen Vorhang dar, der nicht nur den Durchgang eines Gegenstandes, sondern zugleich dessen Höhe und Breite registriert. Zur Erfassung des Volumens des durch den Volumenmeßrahmen 50 geführten Gegenstandes ist ein Geschwindigkeitssignal erforderlich, das auf einfache Weise durch eine Erfassung der Bandlaufgeschwindigkeit des Transportbandes 47 gewonnen werden kann. Dieses Signal kann beispielsweise durch eine Erfassung der Drehzahl der Antriebsrolle 44 oder der Drehzahl der Umlenkrolle 45 erhalten werden.

Außerdem ist an der Förderbahn 1 ein nicht weiter dargestellter Scanner vorgesehen, der entsprechende, an dem Stückgut angebrachte Codestreifen ablesen kann. Dieser Scanner ist im Bereich des Vereinzelungsförderers 3 oder der Meß- und Wägeeinrichtung 4 angeordnet.

Die sich an die Meß- und Wägeeinrichtung 4 unmittelbar an die Seite 25 des Teleskopförderers 2 anschließende Stückgutweiche 5 weist einen trapezförmigen Tisch 57 auf, an dessen Oberseite auf gleicher Höhe mit dem Obertrum des Transportbandes 47 liegende Rollen 58 drehbar gelagert angeordnet sind. Die Breite des Tisches 57 entspricht dabei der Breite der Meß- und Wägeeinrichtung 4, so daß das auf dem Transportband 47 liegende Stückgut glatt auf die Rollen 58 des Tisches 57 übergeht. Von den Rollen 58 sind wenigstens einige angetrieben, so daß das Stückgut entsprechend weiterbefördert wird. Der Tisch 57 verbreitert sich in Transportrichtung so weit, daß an seinem ausgangsseitigen Ende mehrere weitere Fördereinrichtungen aufgestellt werden können. Um festzulegen, auf welche dieser Fördereinrichtungen das zu transportierende Stückgut geleitet wird, sind oberhalb der Rollen 58 des Tisches 57 Leitfahnen 59, 60 angeordnet, die an vertikalen und im Abstand parallel zueinander stehenden Wellen 61,62 schwenkbar gelagert sind. Die Wellen 61,62 stehen mit einer Antriebseinrichtung in Verbindung, die von einer nicht weiter dargestellten Steuereinheit gesteuert ist. Die Steuereinheit steuert die Leitfahnen 59, 60 bedarfsweise manuell oder anhand der von dem Scanner oder der Meß- und Wägeeinrichtung 4 in Verbindung mit dem Volumenmeßrahmen 50 gewonnenen Daten.

In Fig. 3 ist die Führung des Transportbandes 14 und die Anordnung der Umlenkrollen 15 bis 23 sowie der Antriebsrolle 24 separat schematisch dargestellt. An dem Teleskopsegment 12 ist an seinem außen liegenden Ende die Umlenkrolle 17 drehbar gelagert. In einer Entfernung von der Umlenkrolle 17, die wenigstens genauso groß ist wie die maximale Ausfahrweite des Teleskopsegmentes 12 ist die Umlenkrolle 18 in dem Teleskopsegment 12 angeordnet. Ebenso weist das Teleskopsegment 11 an seinem außen liegenden Ende die Umlenkrolle 19 auf. Die Umlenkrolle 19 liegt dabei in einem Abstand von der Umlenkrolle 18, der größer ist als die maximale Ausfahrweite des Teleskopsegmentes 12. In einem größeren Abstand von der Umlenkrolle 19 ist an dem Teleskopsegment 11 die Umlenkrolle 20 vorgesehen, deren Abstand zu der in dem Grundgerüst 9 bei der Seite 10 gelagerten Umlenkrolle 21 größer ist als die maximale Ausfahrweite des Teleskopsegmentes 11. Wird nun das Teleskopsegment 12 ausgefahren, verlängert sich der zwischen der Umlenkrolle 17 und 19 liegende Abschnitt des Transportbandes 14, während sich der zwischen den Umlenkrollen 19 und 18 liegende Abschnitt des Transportbandes 14 um den gleichen Betrag verkürzt. Somit bleibt die Gesamtlänge des in sich geschlossenen, d.h. endlosen Transportbandes 14 konstant, so daß sich das Teleskopsegment 12 frei ausfahren läßt. Entsprechendes gilt für das Teleskopsegment 11.

Die insoweit beschriebene Förderbahn arbeitet wie folgt:

Zur Entladung eines Stückgut enthaltenden Behälters werden die Teleskopsegmente 11, 12 zunächst an den betreffenden Behälter herangefahren. Bei laufenden Transportbändern 14, 36, 47 wird nun das Stückgut nacheinander auf das Transportband 14 aufgegeben. Das Transportband 14 führt das Stückgut bis zu dem Vereinzelungsförderer 3, dessen schneller laufendes Transportband 14 die von dem Transportband 14 herangeführten Stücke übernimmt und aufgrund seiner höheren Laufgeschwindigkeit vereinzelt. Somit gelangen die das Stückgut ausmachenden Gegenstände einzeln auf das mit der gleichen Geschwindigkeit wie der Vereinzelungsförderer 3 laufende Transportband 47 der Meß- und Wägeeinrichtung 4. Diese bestimmt die Masse des auf dem laufenden Transportband 47 liegenden Gegenstandes. Von dem Transportband 47 werden die Gegenstände auf die Stückgutweiche 5 gefördert, wo sie entsprechend weitergeleitet werden. Bei dem Übergang der Gegenständ von dem Transportband 47 der Meß- und Wägeeinrichtung 4 auf die Rollen 58 der Stückgutweiche 5 fahren die Gegenstände durch den Volumenmeßrahmen 50, der die Höhe und Breite des betreffenden Gegenstandes erfaßt. In Verbindung mit dem aus der Bandlaufgeschwindigkeit des Transportbandes 47 abgeleiteten Geschwindigkeitssignal wird somit auch das Volumen des geförderten Stückgutes bestimmt.

Wenn im Bereiche des Vereinzelungsförderers 3 oder der Meß- und Wägeeinrichtung 4 ein Scanner zum Ablesen von auf dem Stückgut angebrachten Codes vorgesehen ist, liefert dieser beim Durchgang der entsprechenden Gegenstände ein Signal an die nicht weiter dargestellte Steuereinheit, die die Stückgutweiche 5 steuert.

Bei einer abgewandelten Ausführungsform des Teleskopförderers 2 ist die Rampe 26 unterteilt. In diesem Fall wird das Transportband 14 nur geringfügig angehoben und die weitere Höhendifferenz zu dem Vereinzelungsförderer 36 durch einen Zwischenförderer 65 überwunden. Dieser weist einen eigenen Rahmen 66 auf, der auf dem Grundgerüst 9 aufgeständert ist. In diesem Rahmen 66 sind zwei Rollen zueinander parallel angeordnet und drehbar gelagert, um die ein kurzes endloses Transportband 67 geführt ist. Dieses Transportband 67 weist dieselbe Breite wie das Transportband 14 auf und läuft mit der gleichen Geschwindigkeit.

In einer weiteren Ausführungsform ist die Stückgutweiche 5 mit dem Teleskopförderer 2 verbunden. Der Tisch 57 kann dabei sowohl mit dem Grundgerüst 9 verschraubt, als auch mit diesem zu einer baulichen Einheit integriert sein.

## Patentansprüche

1. Förderbahn (1) für Stückgut
mit einem Teleskopförderer (2), der ein Grundgerüst (9) mit wenigstens einem in der Transportrichtung (13) gegenüber dem Grundgerüst (9) verstellbaren Teleskopsegment (11, 12) und der ein mit seinem Obertrum wenigstens abschnittsweise dem Stückguttransport dienendes Transportband (14) aufweist, das um wenigstens eine in dem Grundgerüst (9) drehbar gelagerte und von einer Antriebsvorrichtung angetriebene Antriebsrolle (24) sowie um wenigstens eine an dem Teleskopsegment (11, 12) drehbar gelagerte Umlenkrolle (17) geführt ist,
mit einem Vereinzelungsförderer (3), der ein ortsfest gelagertes Gerüst (30) aufweist, in dem wenigstens eine Umlenkrolle (32) und wenigstens eine angetriebene Rolle (34) gelagert sind, um die ein weiteres Transportband (36) geführt ist, dessen Obertrum mit dem ablaufenden Ende des Obertrums des ersten Transportbandes (14) in Förderverbindung steht,
mit einer Wägeeinrichtung (4), die ein separates Grundgestell (40), einen über eine Wägezelle (42) mit dem Grundgestell (40) verbundenen Hilfsrahmen (43) und ein gesondertes Transportband (47) aufweist, das über wenigstens eine in dem Hilfsrahmen (43) drehbar gelagerte Umlenkrolle (45) sowie wenigstens eine angetriebene Antriebsrolle (44) geführt ist und dessen Obertrum im wesentlichen glatt an das Transportband (36) des Vereinzelungsförderers (3) anschließt,
wobei die Transportbänder (36, 47) des Vereinzelungsförderers (3) und der Wägeeinrichtung (4) schneller laufen als das Transportband (14) des Teleskopförderers (2),
dadurch gekennzeichnet,
daß der Vereinzelungsförderer (3) über dem Grundgerüst (9) sitzt,
daß dem Vereinzelungsförderer (3) zum Heranführen von Stückgut eine Übergabestation (26) vorgeschaltet ist und
daß die Wägeeinrichtung (4) über einem Abschnitt des Grundgerüstes (9) des Teleskopförderers (2) sitzt.

2. Förderbahn nach Anspruch 1, dadurch gekennzeichnet, daß das Transportband (14) des Teleskopförderers (2) zur Ausbildung der Übergabestation (26) wenigstens teilweise angehoben ist.

3. Förderbahn nach Anspruch 1, dadurch gekennzeichnet, daß an dem Grundgerüst (9) im Anschluß an das Teleskopsegment (12) eine Rampe (26) vorgesehen ist, über die das Obertrum des Transportbandes (14) des Teleskopförderers (2) von dem Teleskopsegment (12) bis auf die Höhe des Obertrums des Transportbandes (16) des Vereinzelungsförderers (3) geführt ist.

4. Förderbahn nach Anspruch 1, dadurch gekennzeichnet, daß die Wägeeinrichtung (4) von dem Teleskopförderer (2) und dem Vereinzelungsförderer (3) schwingungsmäßig entkoppelt ist.

5. Förderbahn nach Anspruch 1, dadurch gekennzeichnet, daß das Grundgestell (40) der Wägeeinrichtung (4) das Grundgerüst (9) des Teleskopförderers (2) übergreift und separat auf dem Boden aufgestellt ist.

6. Förderbahn nach Anspruch 1, dadurch gekennzeichnet, daß das Obertrum des Transportbandes (47) der Wägeeinrichtung (4) und das Obertrum des Transportbandes (36) des Vereinzelungsförderers (3) im wesentlichen in einer Ebene liegen.

7. Förderbahn nach Anspruch 1, dadurch gekennzeichnet, daß an der Wägeeinrichtung (4) zu beiden Seiten des Transportbandes (47) mit dem Grundgestell (40) verbundene seitliche Verkleidungen (48) angeordnet sind.

8. Förderbahn nach Anspruch 3, dadurch gekennzeichnet, daß an der Rampe (26) zwei Umlenkrollen (15, 16) vorgesehen sind, mit denen das Transportband (14) des Teleskopförderers (2) von der Höhe des Obertrums des Transportbandes (36) des Vereinzelungsförderers (3) unter das Gerüst (30) des Vereinzelungsförderers (3) geführt ist.

9. Förderband nach Anspruch 8, dadurch gekennzeichnet, daß der unter dem Vereinzelungsförderer (3) und der Wägeeinrichtung (4) entlangführende Abschnitt des Transportbandes (14) im wesentlichen parallel zu den Obertrumen des Vereinzelungsförderers (3) und der Wägeeinrichtung (4) angeordnet ist.

10. Förderbahn nach Anspruch 1, dadurch gekennzeichnet, daß eine Stückgutweiche (5) mit dem Grundgerüst (9) des Teleskopbandförderers (2) verbunden ist.

11. Förderbahn nach Anspruch 1, dadurch gekennzeichnet, daß der Teleskopbandförderer (2) in der Höhe verstellbar ist.

12. Förderbahn nach Anspruch 1, dadurch gekennzeichnet, daß nach der Wägeeinrichtung (4) ein Volumenmeßrahmen (50) zur Bestimmung des Rauminhaltes des durch den Volumenmeßrahmen (50) geführten Stückgutes vorgesehen ist.

13. Förderbahn nach Anspruch 1, dadurch gekennzeichnet, daß an der Wägeeinrichtung (4) eine Geschwindigkeitsmeßeinrichtung vorgesehen ist.

14. Förderbahn nach Anspruch 12, dadurch gekennzeichnet, daß der Volumenmeßrahmen (50) einen elektronischen Vorgang mit Lichtschranken aufweist.

15. Förderbahn nach Anspruch 14, dadurch gekennzeichnet, daß sowohl Lichtschranken, deren Lichtbündel quer zu der Transportrichtung sowie horizontal gerichtet sind als auch Lichtschranken vorgesehen sind, deren Lichtstrahlen vertikal verlaufen.

16. Förderbahn nach Anspruch 1, dadurch gekennzeichnet, daß an der Förderbahn (1) ein Scanner zum Ablesen von an dem Stückgut vorgesehenen Markierungen vorgesehen ist.

17. Förderbahn nach Anspruch 1, dadurch gekennzeichnet, daß sich an die Wägeeinrichtung (4) eine weitere Fördereinrichtung (5) anschließt.

18. Förderbahn nach Anspruch 17, dadurch gekennzeichnet, daß die weitere Fördereinrichtung (5) eine auch als Routertisch bezeichnete Stückgutweiche (5) mit einem Eingang und wenigstens zwei Ausgängen ist.

19. Förderbahn nach Anspruch 18, dadurch gekennzeichnet, daß die Stückgutweiche (5) einen trapezförmigen Rollentisch (57) mit zwei Leitfahnen (59, 60) aufweist, die um zwei im Abstand parallel zueinander verlaufende Vertikalachsen schwenkbar sind.

20. Förderbahn nach Anspruch 18, dadurch gekennzeichnet, daß die Transportebene der Stückgutweiche (5) mit der Transportebene der Wägeeinrichtung (4) übereinstimmt.

21. Förderbahn nach Anspruch 16 und 17, dadurch gekennzeichnet, daß die Stückgutweiche (5) von dem Scanner gesteuert ist.

22. Verfahren zum Fördern und Vermessen von Stückgut, bei dem das Stückgut mit Hilfe von Transportbändern entlang eines Transportweges gefördert wird, der sich wenigstens teilweise oberhalb eines zu einem Teleskopförderer gehörigen Grundgerüst erstreckt, bei dem das Stückgut in einem oberhalb des Grundgerüstes liegenden Abschnitt durch mit unterschiedlicher Geschwindigkeit laufende Transportbänder vereinzelt wird und bei dem das Stückgut in einem oberhalb des Grundgerüstes liegenden Abschnitt gewogen wird.

23. Verfahren nach Anspruch 22, dadurch gekennzeichnet, daß das Stückgut bzw. an dem Stückgut vorgesehene Codemarken in einem oberhalb des Grundgerüstes liegenden Abschnitt gescannt wird.

24. Verfahren nach Anspruch 22, dadurch gekennzeichnet, daß das Volumen des Stückgutes in einem unmittelbar im Anschluß an das Grundgerüst des Teleskopförderers liegenden Abschnitt erfaßt wird.

25. Verfahren nach Anspruch 22, 23 oder 24, dadurch gekennzeichnet, daß eine Stückgutweiche in Abhängigkeit von Daten gestellt wird, die aus der Wägung,der Vermessung oder dem Scannen des Stückgutes gewonnen sind.

## Claims

1. Conveying path (1) for items,
having a telescopic conveyor (2) which has a basic framework (9), with at least one telescopic segment (11, 12) which can be adjusted in the transporting direction (13) with respect to the basic framework (9), and also has a transporting belt (14) which, by way of its top strand, serves, at least in certain sections, for transporting items and is guided around at least one drive roller (24), which is mounted rotatably in the basic framework (9) and is driven by a drive device, and around at least one deflection roller (17), which is mounted rotatably on the telescopic segment (11, 12),
having a separating conveyor (3) which has a framework (30) which is mounted in a stationary manner and in which there are mounted at least one deflection roller (32) and at least one driven roller (34) around which there is guided a further transporting belt (36), of which the top strand is in conveying connection with the discharging end of the top strand of the first transporting belt (14),
having a weighing device (4) which has a separate basic framework (40), an auxiliary frame (43), connected to the basic framework (40) via a weighing cell (42), and a separate transporting belt (47) which is guided over at least one deflection roller (45), which is mounted rotatably in the auxiliary frame (43), and at least one driven drive roller (44) and of which the top strand adjoins the transporting belt (36) of the separating conveyor (3) with essentially smooth transition, the transporting belts (36, 47) of the separating conveyor (3) and of the weighing device (4) running more quickly than the transporting belt (14) of the telescopic conveyor (2),
characterized in that the separating conveyor (3) is positioned above the basic framework (9), in that a transfer station (26) is arranged upstream of the separating conveyor (3) for the purpose of advancing items up to the latter, and in that the weighing device (4) is positioned above a section of the basic framework (9) of the telescopic conveyor (2).

2. Conveying path according to Claim 1, characterized in that the transporting bolt (14) of the telescopic conveyor (2) is at least partially raised in order to form the transfer station (26).

3. Conveying path according to Claim 1, characterized in that a ramp (26) is provided on the basic framework (9) such that it adjoins the telescopic segment (12), the top strand of the transporting belt (14) of the telescopic conveyor (2) being guided over the ramp from the telescopic segment (12) to level with the top strand of the transporting belt (36) of the separating conveyor (3).

4. Conveying path according to Claim 1, characterized in that the weighing device (4) is isolated from the telescopic conveyor (2) and the separating conveyor (3) in terms of vibration.

5. Conveying path according to Claim 1, characterized in that the basic framework (40) of the weighing device (4) encompasses the basic framework (9) of the telescopic conveyor (2) and is set down separately on the floor.

6. Conveying path according to Claim 1, characterized in that the top strand of the transporting belt (47) of the weighing device (4) and the top strand of the transporting belt (36) of the separating conveyor (3) are located essentially in one plane.

7. Conveying path according to Claim 1, characterized in that lateral panels (48) which are connected to the basic framework (40) are aranged on the weighing device (4), on either side of the transporting belt (47).

8. Conveying path according to Claim 3, characterized in that two deflection rollers (15, 16) are provided on the ramp (26) and serve to guide the transporting belt (14) of the telescopic conveyor (2) beneath the framework (30) of the separating conveyor (3) from level with the top strand of the transporting belt (36) of the separating conveyor (3).

9. Conveying path according to Claim 8, characterized in that that section of the transporting belt (14) which is guided along beneath the separating conveyor (3) and the weighing device (4) is arranged essentially parallel to the top strands of the separating conveyor (3) and of the weighing device (4).

10. Conveying path according to Claim 1, characterized in that an item diverter (5) is connected to the basic framework (9) of the telescopic conveyor (2).

11. Conveying path according to Claim 1, characterized in that the telescopic conveyor (2) can be adjusted in height.

12. Conveying path according to Claim 1, characterized in that a volume-measuring frame (50) for determining the volume of the items guided through the volume-measuring frame (50) is provided downstream of the weighing device (4).

13. Conveying path according to Claim 1, characterized in that a speed-measuring device is provided on the weighing device (4).

14. Conveying path according to Claim 12, characterized in that the volume-measuring frame (50) operates electronically with light barriers.

15. Conveying path according to Claim 14, characterized in that there are provided both light barriers whose light beams are directed transversely with respect to the transporting direction and horizontally and light barriers whose light beams run vertically.

16. Conveying path according to Claim 1, characterized in that a scanner for reading markings provided on the items is provided on the conveying path (1).

17. Conveying path according to Claim 1, characterized in that the weighing device (4) is adjoined by a further conveying device (5).

18. Conveying path according to Claim 17, characterized in that the further conveying device (5) is an item diverter (5), also referred to as router table, with one inlet and at least two outlets.

19. Conveying path according to Claim 18, characterized in that the item diverter (5) has a trapezoidal roller table (57) with two directing plates (59, 60) which can be pivoted around two vertical spindles which are spaced apart parallel to one another.

20. Conveying path according to Claim 18, characterized in that the transporting plane of the item diverter (5) and the transporting plane of the weighing device (4) correspond.

21. Conveying path according to Claims 16 and 17, characterized in that the item diverter (5) is controlled by the scanner.

22. Method of conveying and measuring items, in the case of which the items are conveyed, with the aid of transporting belts, along a transporting route, at least part of which extends above a basic framework which belongs to a telescopic conveyor, in the case of which the items are separated, by transporting belts running at different speeds, in a section which is located above the basic framework, and in the case of which the items are weighed in a section which is located above the basic framework.

23. Method according to Claim 22, characterized in that the items, or code marks provided on the items, are scanned in a section which is located above the basic framework.

24. Method according to Claim 22, characterized in that the volume of the items is sensed in a section which immediately adjoins the basic framework of the telescopic conveyor.

25. Method according to Claim 22, 23 or 24, characterized in that an item diverter is set as a function of data which are obtained from weighing, measuring or scanning the items.

## Revendications

1. Chemin de convoyage (1) pour marchandises de détail
avec un convoyeur (2) télescopique qui présente un bâti principal (9) avec au moins un tronçon (11, 12) télescopique réglable dans la direction de transport (13) par rapport au bâti principal (9) ainsi qu'une bande transporteuse (14) dont le brin supérieur, au moins par tronçons, sert au transport des marchandises de détail, laquelle bande transporteuse circule sur au moins un galet menant (24) monté tournant dans le bâti principal (9) et entraîné par un dispositif d'entraînement et au moins un galet de déviation (17) monté tournant sur le tronçon télescopique (11, 12),
avec un convoyeur-séparateur (3) qui présente un bâti (30) stationnaire dans lequel sont montés au moins un galet de déviation (32) et au moins un galet (34) entraîné sur lesquels circule une bande transporteuse (36) supplémentaire, dont le brin supérieur est en relation de transport avec l'extrémité côté sortie du brin supérieur de la première bande transporteuse (14),
avec un dispositif de pesage (4) qui présente un châssis principal (40) indépendant, un châssis auxiliaire (43) lié au châssis principal (40) par une cellule de pesage (42) et une bande transporteuse (47) spéciale qui circule sur au moins un galet de déviation (45) monté tournant dans le châssis auxiliaire (43) et sur au moins un galet menant (44) entraîné et dont le brin supérieur fait suite essentiellement sans dénivellation à la bande transporteuse (36) du convoyeur-séparateur (3),
les bandes transporteuses (36, 47) du convoyeur-séparateur (3) et du dispositif de pesage (4) se déplaçant plus rapidement que la bande transporteuse (14) du convoyeur télescopique (2),
caractérisé par le fait
que le convoyeur-séparateur (3) est placé au-dessus d'un tronçon du bâti principal (9),
qu'un poste de transfert (26) est disposé en amont du convoyeur-séparateur (3) aux fins d'amener les marchandises de détail
et que le dispositif de pesage (4) est placé au-dessus du bâti principal (9) du convoyeur télescopique (2).

2. Chemin de convoyage selon la revendication 1, caractérisé par le fait que la bande transporteuse (14) du convoyeur télescopique (2) formant le poste de transfert (26) est au moins partiellement relevée.

3. Chemin de convoyage selon la revendication 1, caractérisé par le fait qu'il est prévu sur le bâti principal (9), à la suite du troncon télescopique (12), une rampe (26) par laquelle le brin supérieur de la bande transporteuse (14) du tronçon télescopique (12) du convoyeur (2) est amené à la hauteur du brin supérieur de la bande transporteuse (16) du convoyeur-séparateur (3).

4. Chemin de convoyage selon la revendication 1, caractérisé par le fait que le dispositif de pesage (4) est découplé sur le plan des vibrations vis-à-vis du convoyeur télescopique (2) et du convoyeur-séparateur (3).

5. Chemin de convoyage selon la revendication 1, caractérisé par le fait que le châssis principal (40) du dispositif de pesage (4) chevauche le bâti principal (9) du convoyeur télescopique (2) et repose séparément sur le sol.

6. Chemin de convoyage selon la revendication 1, caractérisé par le fait que le brin supérieur de la bande transporteuse (47) du dispositif de pesage (4) et le brin supérieur de la bande transporteuse (36) du convoyeur-séparateur (3) sont disposés essentiellement dans un plan.

7. Chemin de convoyage selon la revendication 1, caractérisé par le fait que des éléments d'habillage (48) latéraux liés au châssis principal (40) sont disposés sur le dispositif de pesage (4), de part et d'autre de la bande transporteuse (47).

8. Chemin de convoyage selon la revendication 3, caractérisé par le fait qu'il est prévu, sur la rampe (26), deux galets de déviation (15, 16) à laide desquels la bande transporteuse (14) du convoyeur télescopique (2) est amenée du niveau du brin supérieur de la bande transporteuse (36) du convoyeur-séparateur (3) en-dessous du bâti (30) du convoyeur-séparateur (3).

9. Chemin de convoyage selon la revendication 8, caractérisé par le fait que le tronçon de la bande transporteuse (14) qui circule en-dessous du convoyeur-séparateur (3) et du dispositif de pesage (4) est disposé essentiellement parallèlement aux brins supérieurs du convoyeur-séparateur (3) et du dispositif de pesage (4).

10. Chemin de convoyage selon la revendication 1, caractérisé par le fait qu'un aiguillage (5) est lié au bâti principal (9) du convoyeur télescopique (2).

11. Chemin de convoyage selon la revendication 1, caractérisé par le fait que le convoyeur télescopique (2) est réglable en hauteur.

12. Chemin de convoyage selon la revendication 1, caractérisé par le fait qu'un portique (50) de mesure de volume est prévu à la suite du dispositif de pesage (4) aux fins de déterminer le volume de la marchandises passant à travers ledit portique (50) de mesure de volume.

13. Chemin de convoyage selon la revendication 1, caractérisé par le fait qu'un dispositif de mesure de vitesse est prévu sur le dispositif de pesage (4).

14. Chemin de convoyage selon la revendication 12, caractérisé par le fait que le portique (50) de mesure de volume comporte un rideau électronique avec des barrages photoélectriques.

15. Chemin de convoyage selon la revendication 14, caractérisé par le fait qu'il est prévu à la fois des barrages photoélectriques dont les faisceaux sont dirigés transversalement à la direction de transport et horizontalement et des barrages photoélectriques dont les faisceaux sont dirigés verticalement.

16. Chemin de convoyage selon la revendication 1, caractérisé par le fait qu'un scanneur est prévu aux fins de lire des inscriptions prévues sur la marchandise de détail.

17. Chemin de convoyage selon la revendication 1, caractérisé par le fait qu'un dispositif de convoyage (5) supplémentaire fait suite au dispositif de pesage (4).

18. Chemin de convoyage selon la revendication 17, caractérisé par le fait que le dispositif de convoyage (5) supplémentaire est un aiguillage (5), également connu sous le nom de table de tri, avec une entrée et au moins deux sorties.

19. Chemin de convoyage selon la revendication 18, caractérisé par le fait que l'aiguillage (5) comporte une table à rouleaux (57) en forme de trapèze avec deux écharpes (59, 60) qui pivotent autour de deux axes verticaux parallèles disposés à distance l'un de l'autre.

20. Chemin de convoyage selon la revendication 18, caractérisé par le fait que le plan de transport de l'aiguillage (5) coïncide avec le plan de transport du dispositif de pesage (4).

21. Chemin de convoyage selon les revendication 16 et 17, caractérisé par le fait que l'aiguillage (5) est commandé par le scanneur.

22. Procédé de convoyage et de mesure de marchandises de détail selon lequel la marchandise est transportée à l'aide de bandes transporteuses au long d'un chemin de convoyage qui s'étend au moins partiellement au-dessus d'un bâti principal faisant partie d'un convoyeur télescopique, selon lequel la marchandise est isolée dans un tronçon disposé au-dessus de bâti principal par des bandes transporteuses se déplaçant à des vitesses différentes et selon lequel la marchandise est pesée dans un tronçon situé au-dessus du bâti principal.

23. Procédé selon la revendication 22, caractérisé par le fait que la marchandise ou des inscriptions codées prévues sur la marchandise sont lues par scanneur dans un tronçon situé au-dessus du bâti principal.

24. Procédé selon la revendication 22, caractérisé par le fait que le volume de la marchandise est mesuré dans un tronçon qui est placé immédiatement à la suite du bâti principal du convoyeur télescopique.

25. Procédé selon la revendication 22, 23 ou 24, caractérisé par le fait qu'un aiguillage est positionné en fonction de données fournies par le pesage, par le mesurage ou par la lecture par scanneur de la marchandise.
